# FASCICULE DE BREVET EUROPEEN

(11) **EP 0 721 155 B1**
(45) Date de publication et mention de la délivrance du brevet: **29.12.1999**
(21) Numéro de dépôt: 95120717.4
(22) Date de dépôt: 29.12.1995
(51) Int. Cl.: G04G 1/00, G04G 9/00, G01C 17/04

(54) **Montre comprenant un dispositif d'indication d'un lieu géographique prédéterminé**
Uhr mit einer einen vorherbestimmten geographischen Ort anzeigenden Vorrichtung
Watch comprising a device indicating a predetermined geographical location

(30) Priorité: 04.01.1995 CH 895
(43) Date de publication de la demande: 10.07.1996
(73) Titulaire: ASULAB S.A., CH-2501 Bienne (CH)
(72) Inventeur: Bornand, Etienne, CH-2017 Boudry (CH)
(74) Mandataire: Thérond, Gérard Raymond

(56) Documents cités:
- EP-A- 0 154 096
- EP-A- 0 165 381
- CH-A- 678 359
- FR-A- 2 681 159
- GB-A- 2 151 790
- PATENT ABSTRACTS OF JAPAN vol. 5, no. 175 (P-088), 11 Novembre 1981 & JP-A-56 103389 (SEIKO INSTR & ELECTRONICS LTD), 18 Août 1981,

## Description

La présente invention concerne une montre comprenant un dispositif d'indication d'un lieu géographique prédéterminé. Pour indiquer la direction d'un premier lieu géographique prédéterminé depuis un deuxième lieu géographique quelconque, il est nécessaire de disposer d'une référence géographique et de connaître l'angle formé entre cette référence et l'orthodromie passant par lesdits premier et deuxième lieux. A titre d'exemple, le lieu géographique prédéterminé est la Mecque.

Pour la référence, il est connu d'utiliser une boussole indiquant la direction du nord magnétique. Dans ce cas-ci, la direction dudit premier lieu est donné par l'azimut magnétique de ce premier lieu relativement audit deuxième lieu. Ainsi, un dispositif d'indication d'un lieu prédéterminé depuis un deuxième lieu quelconque, pris parmi une pluralité de lieux déterminés, doit comprendre des moyens fournissant sélectivement les azimuts magnétiques respectifs dudit lieu prédéterminé relativement à ladite pluralité de lieux déterminés.

Le brevet EP-A-0 165 381 décrit un dispositif portatif servant à indiquer la direction de la Mecque depuis une région géographique quelconque. Dans ce document, les différentes régions géographiques sont identifiées par leurs coordonnées géographiques (longitude et latitude). L'azimut magnétique de la Mecque est calculé par un microprocesseur conçu à cet effet, après sélection par l'utilisateur de la région géographique dans laquelle il se trouve. Les différentes régions géographiques sont identifiées par un nom ou par un code figurant dans une brochure spéciale qui est remise à l'utilisateur en même temps qu'il achète le dispositif objet du brevet. Il est également proposé d'identifier la pluralité de régions par leurs coordonnées géographiques ou par les codes de désignation des aéroports internationaux.

L'invention décrite dans le brevet EP-A-0 154 096 concerne une horloge qui procure différents paramètres de temps et de direction à partir du nom d'une ville qu'on lui communique. L'affichage du nom de la ville sélectionnée par l'utilisateur permet le calcul et l'affichage automatique, pour la ville sélectionnée, notamment des fonctions de temps (heures, minutes, mois, etc.). Il est également possible d'afficher les calendriers grégorien et musulman, ainsi que la direction de la Mecque et l'heure des différentes prières.

L'invention décrite dans le brevet FR-A-2 681 159 concerne une montre-bracelet comprenant un compas constitué d'une couronne graduée de 0 à 360° et d'un élément magnétique, et un microprocesseur ayant une mémoire suffisante pour conserver les coordonnées géographiques (longitude et latitude) de mille villes du monde. Au moyen d'un clavier à touches, l'utilisateur introduit dans le microprocesseur le nom de la ville où il se trouve. Le microprocesseur, associé à une horloge réglée sur le temps universel établi à partir de Greenwich comme origine, effectue les correction horaires voulues en fonction du nom de la ville fourni par l'utilisateur. Aux heures de prières musulmanes, le microprocesseur déclenche un signal sonore et affiche un nombre qui est le cap vrai de la Mecque par rapport à la ville où se trouve l'utilisateur.

On connaît par le brevet JP-A-56 103389 une montre-bracelet comprenant un clavier à touches au moyen duquel un utilisateur introduit un code à trois lettres ou un code de désignation d'un aéroport. En fonction du code introduit par l'utilisateur, la montre affiche le nom de la ville et les corrections horaires selon le nom de cette ville.

Le brevet GB-A-2 151 790 concerne un compas électronique comprenant un aimant disposé dans une enceinte remplie d'huile et au moins deux capteurs à effet Hall disposés dans le plan de l'aimant lorsque celui-ci est horizontal. Les capteurs sont reliés via des conducteurs à un circuit électrique capable de déterminer l'orientation de l'aimant à partir des signaux de détection fournis par les capteurs.

Enfin, on connaît par le brevet CH-A-678 359 un dispositif de mesure de la direction du champ magnétique terrestre comprenant une ou plusieurs bobines d'excitation, une ou plusieurs bobines captrices, des moyens de pivotement et un barreau aimanté mobile.

Un but de la présente invention est de fournir une montre comprenant un dispositif d'indication du nord magnétique et des moyens d'indication précis d'un lieu géographique prédéterminé depuis une pluralité de régions géographiques pouvant comprendre un grand nombre de régions.

Un autre but de l'invention est de fournir une telle montre agencée de manière qu'un utilisateur puisse aisément connaître la direction dudit lieu prédéterminé depuis une région quelconque de ladite pluralité de régions géographiques.

L'invention a donc pour objet une montre comprenant :
- un dispositif de détection de la direction du nord magnétique terrestre,
- des premiers moyens pour indiquer une direction dans un plan de la montre,
- des deuxièmes moyens électroniques agencés pour fournir l'azimut magnétique moyen d'un lieu prédéterminé relativement à une quelconque région d'une pluralité de régions géographiques déterminées, et
- des troisièmes moyens agencés pour permettre à un utilisateur de fournir sélectivement auxdits deuxièmes moyens électroniques un nombre parmi une pluralité de nombres, lesdits deuxièmes moyens électroniques étant associés audit dispositif de détection de la direction du nord magnétique pour déterminer, dans ledit plan de la montre, la direction dudit lieu prédéterminé définie comme l'azimut magnétique moyen de ce lieu à partir d'une quelconque desdites régions géographiques dans laquelle se trouve ledit utilisateur, cette direction étant susceptible d'être indiquée par lesdits premiers moyens commandés par lesdits deuxièmes moyens, cette montre étant caractérisée en ce que lesdits deuxièmes moyens électroniques comprennent une mémoire dans laquelle sont stockés les azimuts magnétiques moyens dudit lieu prédéterminé respectivement à partir de ladite pluralité de régions géographiques, ladite mémoire étant adressée de manière qu'à chaque nombre de ladite pluralité de nombres correspond un azimut magnétique moyen parmi lesdits azimuts magnétiques moyens, et en ce que chacun desdits nombres de ladite pluralité de nombres comprend l'indicatif téléphonique du pays dans lequel est situé la région géographique respective de ladite pluralité de régions géographiques.

Il résulte des caractéristiques susmentionnées que la montre selon l'invention peut être utilisée depuis un grand nombre de régions, chacune de ces régions étant simplement codée par l'indicatif téléphonique du pays dans lequel elle est située, indicatif que l'utilisateur peut fournir aux moyens électroniques agencés pour déterminer l'azimut magnétique correspondant. Par région, il est compris un lieu, une ville ou une région plus ou moins vaste à la surface du globe terrestre.

Selon un mode de réalisation préféré, chacun des nombres de ladite deuxième pluralité est formé par l'indicatif téléphonique du pays dans lequel est situé la région respective de ladite première pluralité, suivi par l'indicatif téléphonique de cette région.

Il résulte des caractéristiques du mode de réalisation préféré mentionnées ci-dessus que quasi chaque endroit habité du globe terrestre peut être identifié à une région donnée dans laquelle cet endroit est situé. Ensuite, dans les régions ayant une certaine densité de population, chaque région correspondant à un seul et même indicatif téléphonique a des dimensions relativement petites, ce qui assure une bonne précision dans l'indication dudit lieu prédéterminé.

Finalement, il est généralement aisé pour un utilisateur de connaître l'indicatif téléphonique de l'endroit où il se trouve. Ainsi, sans posséder de table de correspondance détaillée et encombrante, un utilisateur peut fournir, depuis un quelconque endroit possédant un réseau téléphonique, le nombre-code permettant aux moyens électroniques de déterminer l'azimut magnétique correspondant, lequel est stocké dans une mémoire électronique de la montre selon l'invention.

D'autres caractéristiques et avantages de l'invention seront décrits ci-après à l'aide de la description suivante, faite en référence aux dessins annexés, donnés à titre d'exemples nullement limitatifs, dans lesquels :
- la figure 1 est une vue générale de dessus d'une montre selon un premier mode de réalisation;
- la figure 2 est une représentation schématique du premier mode de réalisation;
- la figure 3 est une représentation schématique d'un deuxième mode de réalisation d'une montre selon l'invention.

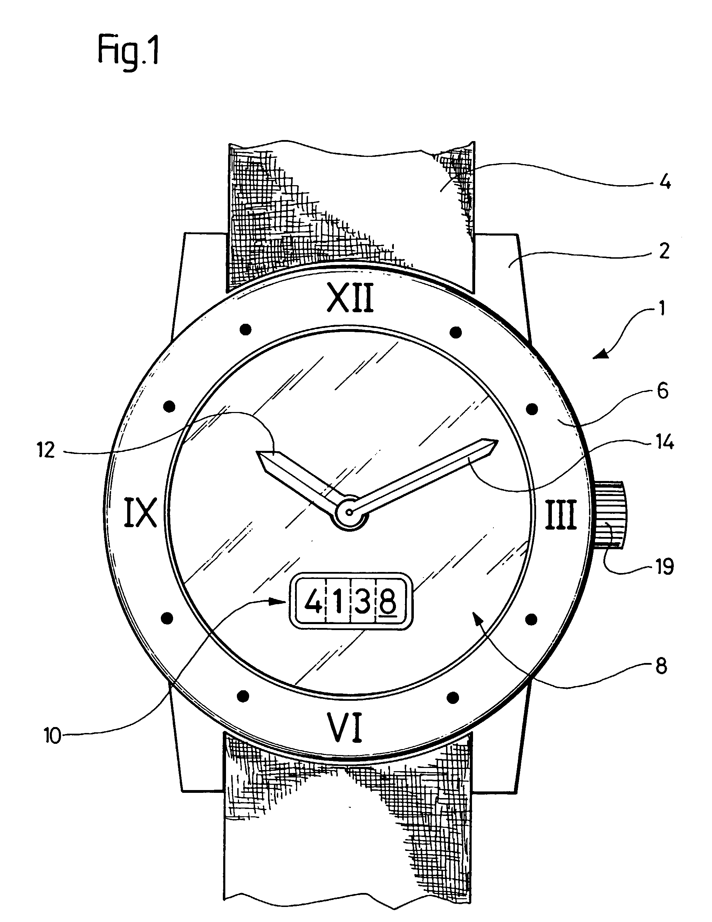

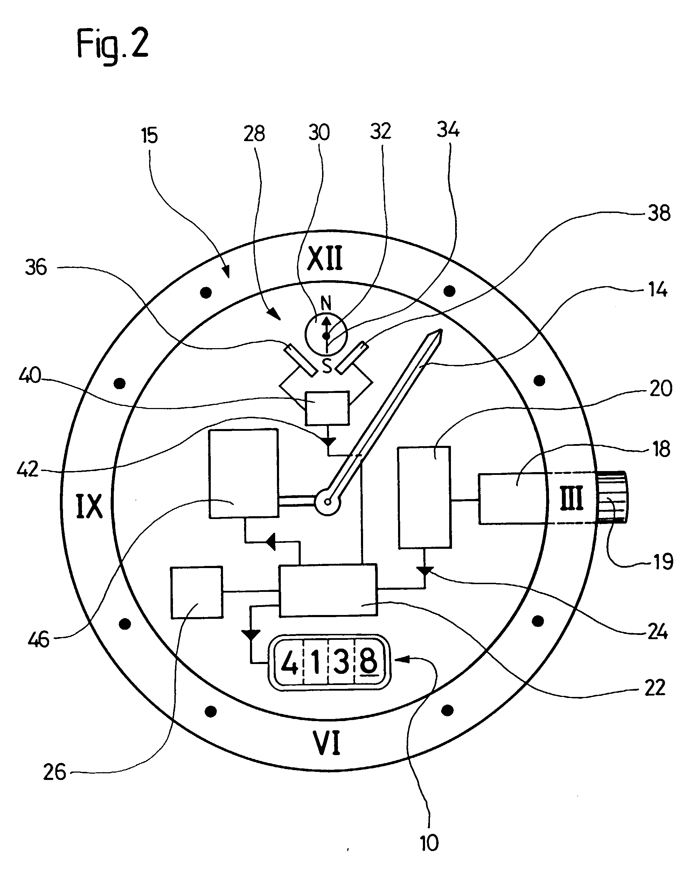

En se référant ci-après aux figures 1 et 2, on décrira un premier mode de réalisation d'une montre selon l'invention.

La montre 1 est une montre-bracelet comprenant un boîtier 2 et un bracelet 4. Le boîtier 2 comprend notamment une lunette 6 et un cadran 8 dont une zone est prévue pour un affichage digital 10. Sur la lunette 6 est prévu les indices des heures pour l'affichage analogique de l'heure au moyen des aiguilles 12 et 14.

La montre 1 comprend un dispositif de commande 18 solidaire d'une couronne 19 actionnable par un utilisateur de la montre. Le dispositif 18 est associé électriquement à un dispositif électrique 20 pour fournir à une unité électronique de gestion et de commande 22 un signal d'entrée 24. L'unité 22 est reliée électriquement à l'affichage digital 10 formé par un affichage à cristaux liquides (LCD) comportant quatre digits. Si nécessaire, le nombre de digits peut bien évidemment être supérieur à quatre. L'unité 22 est également reliée à une unité de stockage d'informations 26 nommée "mémoire" par la suite.

L'unité 22 est également reliée à un dispositif 28 de détection de la direction du nord magnétique terrestre comprenant un aimant permanent 30 monté rotatif sur un axe 32. L'aimant 30 est un aimant bipolaire à aimantation radiale. Cet aimant possède ainsi un axe magnétique 34 perpendiculaire à l'axe 32. Le dispositif 28 comprend également deux capteurs magnétiques 36 et 38 agencés pour capter le flux magnétique de l'aimant 30 et déterminer la direction de l'axe magnétique 34. Les deux capteurs 36 et 38 sont reliés à une unité électronique 40 de traitement des signaux électriques fournis respectivement par les capteurs 36 et 38. L'unité 40 fournit à l'unité 22 un signal électrique 42 représentatif de la direction de l'axe magnétique 34 dans le plan général de la montre, correspondant au plan du cadran 8, relativement à un axe de référence situé dans ce plan général. A titre d'exemple, cet axe de référence est formé par un axe six heures - douze heures fixe relativement au boîtier 2.

Finalement, l'unité 22 est reliée électriquement à un moteur électromagnétique 46 couplé mécaniquement à l'aiguille 14. L'unité 22 est agencée pour commander le moteur 46, notamment dans un mode de fonctionnement pas à pas connu de l'homme du métier.

Le fonctionnement de la montre dans un mode d'indication de la direction d'un lieu prédéterminé et selon le premier mode de réalisation de l'invention sera décrit ci-après.

Selon l'invention, il est prévu qu'un utilisateur de la montre puisse fournir sélectivement, à l'unité électronique 22, des signaux d'entrée respectivement représentatifs d'une pluralité de nombres. Pour ce faire, l'unité 22 comprend une mémoire ou un compteur interne programmable au moyen des dispositifs 18 et 20. Le nombre correspondant à l'état électrique du compteur interne peut être affiché sur l'affichage 10 pour que l'utilisateur ait connaissance de l'état de ce compteur. Des dispositifs d'introduction de données comportant les dispositifs 18 et 20 sont connus de l'art antérieur, notamment des documents CH 632 894, CH 608 164 et EP 0 569 868.

Les dispositifs 18 et 20 et l'unité 22 sont agencés de manière qu'il est possible de varier sélectivement chacun des digits des quatre digits de l'affichage 10 pour former un nombre quelconque sélectionnable par un utilisateur. A titre d'exemple, une marche à suivre pour la sélection d'un nombre est la suivante :
1) Presser sur la couronne 19 pendant un laps de temps supérieur à trois secondes, ce qui a pour conséquence d'initialiser le compteur interne de l'unité 22 et également l'affichage 10 qui affiche alors quatre zéros dont le premier est souligné ou clignote;
2) Tourner la couronne 19 dans un sens ou dans l'autre pour incrémenter ou décrémenter le chiffre du premier digit jusqu'à ce que le chiffre désiré apparaisse;
3) Presser sur la couronne 19, ce qui a pour conséquence d'activer le deuxième digit en mode sélection;
4) Tourner la couronne 19 pour sélectionner le chiffre du deuxième digit;
5) Procéder de même pour les troisième et quatrième digits;
6) Presser à nouveau sur la couronne 19 une fois l'ensemble des chiffres des quatre digits sélectionnés, ce qui a pour conséquence l'enregistrement du nombre sélectionné dans la mémoire programmable ou le compteur interne de l'unité 22.

A chacun des nombres sélectionnables par l'utilisateur et compris dans une pluralité de nombres déterminés correspond une région géographique donnée. Pour chacune de ces régions géographiques données, l'homme du métier peut déterminer la valeur d'un azimut magnétique moyen correspondant à la direction d'un lieu prédéterminé. Dans la mémoire 26 est stockée une pluralité d'azimuts magnétiques moyens dudit lieu prédéterminé, notamment de la Mecque, respectivement à partir d'une pluralité de régions géographiques codées au moyen de ladite pluralité de nombres sélectionnables par l'utilisateur de la montre.

La mémoire 26 est ainsi adressée de manière qu'à chaque nombre de ladite pluralité de nombres correspond un azimut magnétique respectif dont la valeur peut être fournie à l'unité 22 lorsque ce nombre est enregistré dans ledit compteur interne de l'unité 22.

A l'aide du signal de commande 42 fourni par le dispositif 28 et de la valeur de l'azimut magnétique moyen fourni par la mémoire 26, l'unité 22 détermine la position angulaire pour l'aiguille 14, servant d'indicateur de direction, relativement à un axe de référence de la montre 1, notamment l'axe six heures - douze heures. Ensuite, l'unité 22 est agencée pour commander le moteur 46 de manière que celui-ci positionne angulairement l'aiguille 14 pour aligner cette aiguille 14 sur la direction d'un lieu prédéterminé, notamment de la Mecque. Pour ce faire, il est nécessaire que la position initiale de l'aiguille 14 soit connue de l'unité 22 lors de l'activation d'un mode d'indication d'un lieu prédéterminé. La détermination temporelle de la position d'une aiguille dans une montre est connue de l'homme du métier. En général, une étape d'initialisation est prévue pour repérer la position initiale de l'aiguille après une interruption de l'alimentation de la montre.

Dans le mode de réalisation décrit ici, il est prévu que la pluralité de nombres sélectionnables par un utilisateur de la montre correspondent aux indicatifs téléphoniques respectifs de la pluralité de régions géographiques. Dans la variante représentée sur la figure 1, chaque nombre sélectionnable possède quatre chiffres prévus pour l'indicatif téléphonique du pays suivi de l'indicatif téléphonique de la région concernée. A titre d'exemple, le nombre 4138 représenté à la figure 1 est composé du nombre 41 correspondant à l'indicatif téléphonique de la Suisse et du nombre 38 correspondant à l'indicatif téléphonique de la région de Neuchâtel en Suisse.

Le codage au moyen des indicatifs de téléphone est particulièrement astucieux et efficace. En tout endroit possédant un réseau téléphonique, un utilisateur peut connaître le nombre-code permettant d'indiquer la position de l'utilisateur à l'unité électronique de gestion et de commande 22.

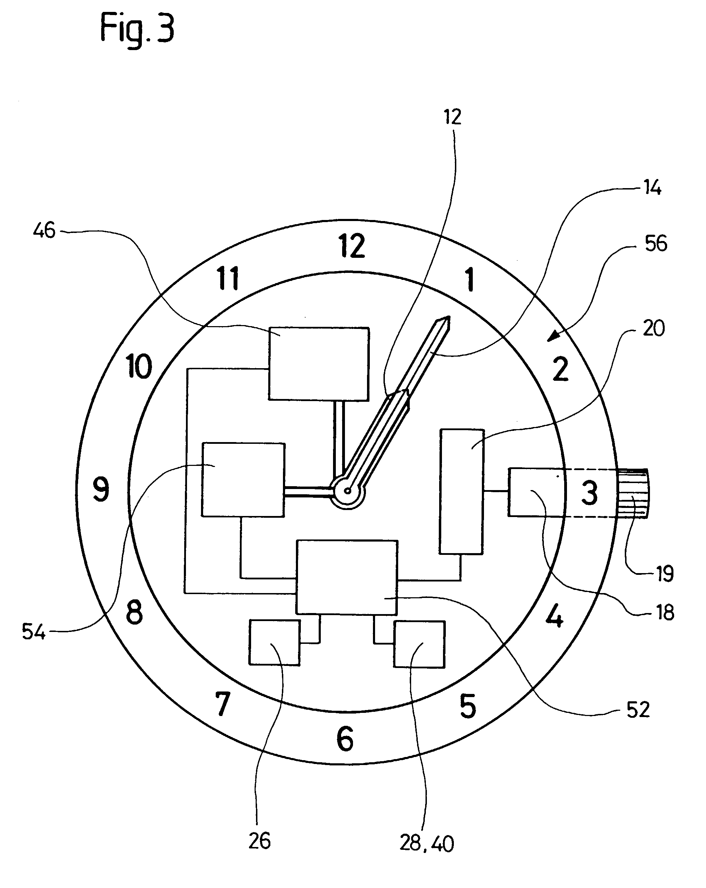

A l'aide de la figure 3, on décrira ci-après brièvement un deuxième mode de réalisation de l'invention. Les références déjà décrites ci-avant ne seront pas à nouveau décrites ici.

Ce deuxième mode de réalisation diffère du premier mode de réalisation en ce que la sélection de la valeur de chaque chiffre composant le nombre-code sélectionnable par un utilisateur au moyen des dispositifs 18 et 20 est effectuée au moyen des aiguilles 12 et 14. Lorsque la montre est activée dans un mode de sélection d'un nombre-code, l'unité électronique de gestion et de commande 52, similaire à l'unité 22 du premier mode de réalisation, commande les moteurs électromagnétiques 46 et 54 de manière à ce que les deux aiguilles 12 et 14 se superposent l'une l'autre en pointant sur l'un des chiffres 1 à 10 prévus sur le cadran ou la lunette de la boîte de montre schématisé à la figure 3 par l'anneau 56. Par une ou plusieurs pressions successives sur la couronne 19 solidaire du dispositif 18, les aiguilles 12 et 14 sont alignées sur l'un quelconque des chiffres 1 à 10 servant à l'indication des heures. L'indice 10 indiquant dix heures correspond, dans le mode de sélection du nombre-code, au chiffre zéro.

A titre d'exemple, le positionnement conjoint des aiguilles 12 et 14 sur l'un quelconque des chiffres 1 à 10 est effectué au moyen de courtes pressions sur la couronne 19. Une fois le premier chiffre sélectionné, on effectue une pression longue sur la couronne 19 de manière à enregistrer ce chiffre dans l'unité 52 et passer à la sélection du deuxième chiffre composant le nombre-code. La sélection de chacun des chiffres du nombre sélectionné par l'utilisateur est effectuée de manière équivalente.

On remarquera ici que, dans une variante de réalisation, une seule aiguille peut être utilisée pour la sélection des chiffres composant le nombre-code, par exemple l'aiguille 12.

## Revendications

1. Montre comprenant :
- un dispositif (28) de détection de la direction du nord magnétique terrestre,
- des premiers moyens (14, 46) pour indiquer une direction dans un plan de la montre,
- des deuxièmes moyens électroniques (22, 26; 52) agencés pour fournir l'azimut magnétique moyen d'un lieu prédéterminé relativement à une quelconque région d'une pluralité de régions géographiques déterminées, et
- des troisièmes moyens (10; 12, 14, 18, 19, 20) agencés pour permettre à un utilisateur de fournir sélectivement auxdits deuxièmes moyens électroniques un nombre parmi une pluralité de nombres,
lesdits deuxièmes moyens électroniques étant associés audit dispositif de détection de la direction du nord magnétique pour déterminer, dans ledit plan de la montre, la direction dudit lieu prédéterminé définie comme l'azimut magnétique moyen de ce lieu à partir d'une quelconque desdites régions géographiques dans laquelle se trouve ledit utilisateur, cette direction étant susceptible d'être indiquée par lesdits premiers moyens commandés par lesdits deuxièmes moyens,
cette montre étant caractérisée en ce que lesdits deuxièmes moyens électroniques comprennent une mémoire (26) dans laquelle sont stockés les azimuts magnétiques moyens dudit lieu prédéterminé respectivement à partir de ladite pluralité de régions géographiques, ladite mémoire étant adressée de manière qu'à chaque nombre de ladite pluralité de nombres correspond un azimut magnétique moyen parmi lesdits azimuts magnétiques moyens, et en ce que chacun desdits nombres de ladite pluralité de nombres comprend l'indicatif téléphonique du pays dans lequel est situé la région géographique respective de ladite pluralité de régions géographiques.

2. Montre selon la revendication 1, caractérisée en ce que chacun desdits nombres est formé par l'indicatif téléphonique du pays dans lequel est située la région respective de ladite pluralité de régions géographiques, suivi par l'indicatif téléphonique de cette région.

3. Montre selon l'une quelconque des revendications 1 à 2, caractérisée en ce que ledit dispositif de détection (28) de la direction du nord magnétique terrestre comprend un aimant permanent bipolaire (30), à aimantation radiale, monté librement sur un axe (32) et au moins deux capteurs magnétiques (36, 38) agencés pour capter le flux magnétique dudit aimant, ladite montre comprenant en outre des quatrièmes moyens électroniques (40, 22; 52) associés audit capteur magnétique pour déterminer la position angulaire de l'axe magnétique (34) dudit aimant, lesdits quatrièmes moyens électroniques étant associés auxdits deuxièmes moyens électroniques pour commander lesdits premiers moyens de manière à ce que ces derniers indiquent la direction correspondant audit azimut magnétique moyen dudit lieu prédéterminé.

4. Montre selon l'une des revendications précédentes, caractérisée en ce que lesdits troisièmes moyens (10; 12, 14, 18, 19, 20) comprennent un dispositif d'affichage (10;12, 14) et un dispositif électrique (20) associé à un dispositif de commande (18, 19) actionnable par ledit utilisateur, ledit dispositif électrique étant agencé pour fournir un signal (24) d'entrée auxdits deuxièmes moyens (22; 52), lesquels commandent ledit dispositif d'affichage de manière à permettre à cet utilisateur de sélectionner un nombre quelconque parmi ladite pluralité de nombres.

5. Montre selon la revendication 4, caractérisée en ce que ledit dispositif d'affichage (12, 14) comprend au moins une aiguille (12) associée à des indices fixes représentatifs des chiffres zéro à neuf.

## Patentansprüche

1. Uhr, mit
- einer Vorrichtung (28) zur Erfassung der terrestrischen magnetischen Nordrichtung,
- ersten Mitteln (14, 46) zum Angeben einer Richtung in einer Ebene der Uhr,
- zweiten elektronischen Mitteln (22, 26; 52), die so beschaffen sind, daß sie den mittleren magnetischen Azimutwinkel eines vorgegebenen Ortes relativ zu einer beliebigen Region mehrerer bestimmter geographischer Regionen liefern, und
- dritten Mitteln (10; 12, 14, 18, 19, 20), die so beschaffen sind, daß sie einem Benutzer ermöglichen, in die zweiten elektronischen Mittel wahlweise eine von mehreren Zahlen einzugeben,
wobei die zweiten elektronischen Mittel der Vorrichtung zur Erfassung der magnetischen Nordrichtung zugeordnet sind, um ausgehend von irgendeiner der geographischen Regionen, in der sich der Benutzer befindet, in der genannten Ebene der Uhr die Richtung des vorgegebenen Ortes, die als mittlerer magnetischer Azimutwinkel dieses Ortes definiert ist, zu bestimmen, wobei diese Richtung von den ersten Mitteln, die von den zweiten Mitteln gesteuert werden, angegeben werden kann,
wobei diese Uhr dadurch gekennzeichnet ist, daß die zweiten elektronischen Mittel einen Speicher (26) enthalten, in dem die mittleren magnetischen Azimutwinkel des vorgegebenen Ortes jeweils ausgehend von den mehreren geographischen Regionen gespeichert sind, wobei der Speicher in der Weise adressiert wird, daß jeder Zahl der mehreren Zahlen einer der mittleren magnetischen Azimutwinkel entspricht, und daß jede der mehreren Zahlen die Telephonvorwahl des Landes enthält, in der sich die jeweilige geographische Region der mehreren geographischen Regionen befindet.

2. Uhr nach Anspruch 1, dadurch gekennzeichnet, daß jede der Zahlen durch die Telephonvorwahl des Landes gebildet ist, in der sich die jeweilige Region der mehreren geographischen Regionen befindet, gefolgt von der Telephonvorwahl dieser Region.

3. Uhr nach irgendeinem der Ansprüche 1 bis 2, dadurch gekennzeichnet, daß die Vorrichtung (28) zur Erfassung der terrestrischen magnetischen Nordrichtung einen bipolaren Permanentmagneten (30) mit radialer Magnetisierung, der auf einer Achse (32) frei angebracht ist, und wenigstens zwei magnetische Aufnehmer (36, 38), die so beschaffen sind, daß sie den magnetischen Fluß des Magneten aufnehmen können, enthält, wobei die Uhr außerdem vierte elektronische Mittel (40, 22; 52) enthält, die dem magnetischen Aufnehmer zugeordnet sind, um die Winkelposition der magnetischen Achse (34) des Magneten zu bestimmen, wobei die vierten elektronischen Mittel mit den zweiten elektronischen Mitteln verbunden sind, um die ersten Mittel in der Weise zu steuern, daß diese letzteren die Richtung angeben, die dem mittleren magnetischen Azimutwinkel des vorgegebenen Ortes entspricht.

4. Uhr nach einem der vorangehenden Ansprüche, dadurch gekennzeichnet, daß die dritten Mittel (10; 12, 14, 18, 19, 20) eine Anzeigevorrichtung (10; 12, 14) und eine elektrische Vorrichtung (20), die einer von dem Benutzer betätigbaren Steuervorrichtung (18, 19) zugeordnet ist, enthalten, wobei die elektrische Vorrichtung so beschaffen ist, daß sie an die zweiten Mittel (22; 52) ein Eingangssignal (24) liefert, wobei die zweiten Mittel (22; 52) die Anzeigevorrichtung in der Weise steuern, daß der Benutzer aus den mehreren Zahlen eine beliebige Zahl wählen kann.

5. Uhr nach Anspruch 4, dadurch gekennzeichnet, daß die Anzeigevorrichtung (12, 14) wenigstens einen Zeiger (12) enthält, der festen Indizes zugeordnet ist, die die Ziffern Null bis Neun darstellen.

## Claims

1. Watch comprising :
- a mechanism (28) for detecting the direction of the terrestrial magnetic north,
- first means (14, 46) for indicating a direction in a plane of the watch,
- second electronic means (22, 26; 52) arranged in order to furnish the mean magnetic azimuth of a predetermined locality relative to any region whatsoever of a plurality of defined geographic regions, and
- third means (10; 12, 14, 18, 19, 20) arranged in order to permit a user to furnish selectively a number from among a plurality of numbers to said second electronic means,
said second electronic means being associated with said mechanism for detecting the direction of the magnetic north in order to determine, in said plane of the watch, the direction of said predetermined locality defined as the mean magnetic azimuth of such locality from any one whatsoever of said geographic regions in which said user is located, this direction being able to be indicated by said first means controlled by said second means,
such watch being characterized in that said second means comprise a memory (26) in which are stored mean magnetic azimuths of said predetermined locality respectively from said plurality of geographic regions, said memory being addressed in a manner such that to each number of said plurality of numbers corresponds a mean magnetic azimuth among said mean magnetic azimuths, and in that each of said numbers of said plurality of numbers comprises the telephone calling code of the country in which the respective geographic region of said plurality of geographic regions is located.

2. Watch according to claim 1, characterized in that each of said numbers is formed by the telephone calling code of the country in which the respective region of said first plurality of geographic regions is located, followed by the telephone area code of such region.

3. Watch according to any of claims 1 to 2, characterized in that said mechanism (28) for detecting the direction of the terrestrial magnetic north comprises a bipolar permanent magnet (30) with radial magnetization, freely mounted on an axis (32) and at least two magnetic sensors (36, 38) arranged so as to sense the magnetic flux of said magnet, said watch furthermore comprising fourth electronic means (40, 22; 52) associated with said magnetic sensors in order to determine the angular position of the magnetic axis (34) of said magnet, said fourth electronic means being associated with said second electronic means in order to control said first means in a manner such that these latter indicate the direction corresponding to said mean magnetic azimuth of said predetermined locality.

4. Watch according to any of the preceding claims, characterized in that said third means (10; 12, 14, 18, 19, 20) comprise a display arrangement (10; 12, 14) and an electrical arrangement (20) associated with a control arrangement (18, 19) operable by said user, said electrical arrangement being adapted to furnish an input signal (24) to said second means (22; 52) which controls said display arrangement in a manner to permit such user to select any number whatsoever among said second plurality of numbers.

5. Watch according to claim 4, characterized in that said display arrangement (12, 14) comprises at least one hand (12) associated with fixed indicia representative of the digits zero to nine.
